# EUROPEAN PATENT APPLICATION

(11) **EP 4 765 085 A1**
(43) Date of publication of application: **24.06.2026**
(21) Application number: 24890637.2
(22) Date of filing: 11.11.2024
(51) Int. Cl.: G09G 3/20, G06F 3/147, G06F 3/0487, G06F 3/042

(54) **DISPLAY SCREEN CONTROL METHOD AND ELECTRONIC DEVICE**

(30) Priority: 15.11.2023 CN 202311547675
(71) Applicant: Honor Device Co., Ltd., Shenzhen, Guangdong 518040 (CN)
(72) Inventor: ZHUANG, Ruigang, Shenzhen, Guangdong 518040 (CN)
(74) Representative: Gill Jennings & Every LLP
(86) International application number: PCT/CN2024/131379
(87) International publication number: WO 2025/103282

(57) **Abstract**

Embodiments of this application relate to the field of display technologies, and provide a display screen control method and an electronic device, to resolve a problem of a low success rate of in-display fingerprint unlocking in some electronic devices. A specific solution includes: displaying a lock screen interface; detecting, when brightnesses of a first region and a second region of the display screen are a first brightness value, that a user touches the first region of the display screen, where the first region of the display screen overlaps with a sensing surface of the fingerprint sensor, the second region is a display region of the display screen other than the first region, and the first brightness value is a pre-configured maximum brightness value corresponding to the display screen; configuring a target brightness register of the display screen from a first attribute value to a second attribute value, where the target brightness register corresponds to the first region and is configured to control the brightness of the first region; and correcting the brightness of the first region from the first brightness value to a second brightness value after configuring the target brightness register to the second attribute value, where the second brightness value is greater than the first brightness value.

## Description

This application claims priority to Chinese Patent Application No. 202311547675.3, filed with the China National Intellectual Property Administration on November 15, 2023 and entitled "DISPLAY SCREEN CONTROL METHOD AND ELECTRONIC DEVICE", which is incorporated herein by reference in its entirety.

### TECHNICAL FIELD

Embodiments of this application relate to the field of display technologies, and in particular, to a display screen control method and an electronic device.

### BACKGROUND

When in-display fingerprint unlocking is enabled in a high brightness environment, a display screen needs to enter a high brightness mode (high brightness mode, HBM). In the HBM mode, a brightness of a fingerprint collection region on the display screen is set to a target brightness value. The target brightness value is higher than a conventional maximum brightness of the display screen, so that the brightness of the fingerprint collection region on the display screen is higher than that of another region, and an obvious fingerprint light spot is formed.

However, some display screens do not support the HBM mode. In this way, in a special scenario (for example, in the high brightness environment, or in another scenario in which the brightness of the display screen already reaches a conventional maximum brightness value) of an electronic device configured with the type of display screen, the in-display fingerprint unlocking has a relatively low success rate.

### SUMMARY

Embodiments of this application provide a display screen control method and an electronic device, to improve a success rate of in-display fingerprint unlocking in a special scenario.

To achieve the foregoing objective, the following technical solutions are used in embodiments of this application.

According to a first aspect, an embodiment of this application provides a display screen control method, which is applied to an electronic device. The electronic device includes a display screen and a fingerprint sensor. The fingerprint sensor is configured below the display screen. The method includes: displaying a lock screen interface; detecting, when brightnesses of a first region and a second region of the display screen are a first brightness value, that a user touches the first region of the display screen, where the first region of the display screen overlaps with a sensing surface of the fingerprint sensor, the second region is a display region of the display screen other than the first region, and the first brightness value is a pre-configured maximum brightness value corresponding to the display screen; configuring a target brightness register of the display screen from a first attribute value to a second attribute value, where the target brightness register corresponds to the first region and is configured to control the brightness of the first region; and correcting the brightness of the first region from the first brightness value to a second brightness value after configuring the target brightness register to the second attribute value, where the second brightness value is greater than the first brightness value.

In the foregoing embodiment, when the display screen displays the lock screen interface, and both the first region and the second region reach the pre-configured maximum brightness value, gray scale values of pixel units corresponding to the first region and the second region reach a maximum. If it is detected that the user needs to perform fingerprint unlocking, the brightness of the first region can be increased from the first brightness value to the second brightness value under the same gray scale value by changing the attribute value of the target brightness register corresponding to the first region. In this way, an obvious light spot is formed in the first region compared with the second region, thereby implementing an effect corresponding to an HBM mode and improving a success rate of fingerprint unlocking.

In some embodiments, after the detecting that a user touches the first region of the display screen and before the configuring a target brightness register of the display screen to the second attribute value, the method further includes: obtaining an ambient light brightness value; determining that the ambient light brightness value is greater than a first brightness threshold, or determining that a first backlight brightness corresponding to the ambient light brightness value is greater than a third brightness value, where the third brightness value is less than the first brightness value, a difference between the third brightness value and the first brightness threshold is less than a preset value, and the electronic device is configured with a correspondence between a different ambient light brightness and a backlight brightness; obtaining a first real-time backlight brightness of the display screen; and determining that the first real-time backlight brightness is greater than the third brightness value.

In the foregoing embodiment, whether an effect corresponding to the HBM mode currently needs to be implemented by modifying the attribute value of the target brightness register is evaluated from a plurality of dimensions such as the ambient light brightness value and the real-time backlight brightness. The real-time backlight brightness may be used to monitor whether the user stops the fingerprint unlocking midway, so as to avoid abnormal brightness display of the first region due to modification of the target brightness register in a scenario in which the fingerprint unlocking is not needed. Through the foregoing evaluation, when a requirement for entering the HBM mode does not exist, accidentally enabling the HBM mode is avoided.

In some embodiments, after the detecting that a user touches the first region of the display screen and before the configuring a target brightness register of the display screen to the second attribute value, the method further includes: obtaining an ambient light brightness value; determining that the ambient light brightness value is greater than a first brightness threshold, or determining that a first backlight brightness corresponding to the ambient light brightness value is greater than a third brightness value, where the third brightness value is less than the first brightness value, a difference between the third brightness value and the first brightness threshold is less than a preset value, and the electronic device is configured with a correspondence between a different ambient light brightness and a backlight brightness; obtaining a first real-time backlight brightness of the display screen and a first gray scale value of a displayed background image; and determining that the first real-time backlight brightness is greater than the third brightness value, and that the first gray scale value is greater than a preset gray scale threshold.

In the foregoing embodiment, whether an effect corresponding to the HBM mode currently needs to be implemented by modifying the attribute value of the target brightness register is evaluated from a plurality of dimensions such as the ambient light brightness value, the real-time backlight brightness, and the real-time gray scale value. Through the foregoing evaluation, when a requirement for entering the HBM mode does not exist, accidentally enabling the HBM mode is avoided.

In some embodiments, the method further includes: collecting first fingerprint information during a period in which the brightness of the first region is the second brightness value; restoring the configuration of the target brightness register of the display screen from the second attribute value to the first attribute value after collecting the first fingerprint information; and stopping, by the display screen, correcting the brightness of the first region after the target brightness register is configured as the first attribute value.

In the foregoing embodiment, after the fingerprint information is collected, the attribute value of the target brightness register is restored, to avoid an abnormality in brightness display of the first region.

In some embodiments, before the configuring a target register of the display screen to the second attribute value, the method further includes: reading a first attribute value of the target brightness register from the display screen, and storing the first attribute value; and determining the second attribute value based on the first attribute value and a pre-configured configuration file, where the configuration file includes the first attribute value and a corresponding attribute correction value, and the second attribute value is a sum of the first attribute value and the attribute correction value.

In some embodiments, the electronic device further includes a display driver, and the correcting the brightness of the first region from the first brightness value to a second brightness value includes: receiving, by the display screen, first brightness configuration information from the display driver, where the first brightness configuration information carries the first brightness value for the first region; and increasing, at the second attribute value of the target brightness register, the brightness of the first region to the second brightness value in response to the first brightness configuration information, where the second brightness value is a sum of the first brightness value and a first brightness increment, and the first brightness increment is related to the attribute correction value between the second attribute value and the first attribute value.

In some embodiments, the electronic device further includes a display driver, and after the stopping, by the display screen, correcting the brightness of the first region, the method further includes: receiving, by the display screen, second brightness configuration information from the display driver, where the second brightness configuration information carries a fourth brightness value for the first region, and the fourth brightness value is less than or equal to the first brightness value; and adjusting, at the first attribute value of the target brightness register, the brightness of the first region to the fourth brightness value in response to the second brightness configuration information.

In some embodiments, before the configuring a target brightness register of the display screen to the first attribute value, the method further includes: instructing the display screen to reduce the backlight brightness; obtaining a second real-time backlight brightness of the display screen and/or a second gray scale value of a displayed background image; determining that the second real-time backlight brightness is less than or equal to the third brightness value; or determining that the second gray scale value is less than or equal to the preset gray scale threshold.

In the foregoing embodiment, a scenario in which the HBM mode is exited can be accurately identified through the real-time backlight brightness and/or the real-time gray scale value, so that impact on normal use of the electronic device by the user can be avoided.

In some embodiments, when an ambient light brightness value in a space where the electronic device is located is greater than a first brightness threshold, the method further includes: controlling the display screen to be off in response to a user operation; displaying a screen unlocking interface in response to the user touching the first region, where during display of the screen unlocking interface, the second region of the display screen includes an unlit pixel unit; and controlling the display screen to adjust the brightness of the first region to a fifth brightness value, where the fifth brightness value is less than or equal to the first brightness value.

According to a second aspect, an embodiment of this application provides an electronic device. The electronic device includes a display screen, a fingerprint sensor, one or more processors, and a memory. The fingerprint sensor is configured to collect fingerprint information. The display screen is configured to adjust a backlight brightness to assist the fingerprint sensor in collecting a fingerprint. The memory is configured to store a computer instruction. The display screen is configured to push information to a user. The one or more processors, when executing the computer instruction, are configured to perform the method in the first aspect and possible embodiments thereof.

According to a third aspect, an embodiment of this application provides a computer storage medium, including a computer instruction. When the computer instruction is run on an electronic device, the electronic device is caused to perform the method in the foregoing first aspect, the second aspect, and possible embodiments thereof.

According to a fourth aspect, this application provides a computer program product. When the computer program product is run on the foregoing electronic device, the electronic device is caused to perform the method in the foregoing first aspect and possible embodiments thereof.

According to a fifth aspect, this application provides a chip system, which is applied to an electronic device and stores a computer program. When the computer program is executed, the electronic device is caused to perform the method in the foregoing first aspect and possible embodiments thereof.

It may be understood that the electronic device, the computer storage medium, and the computer program product provided in the foregoing aspects are all applicable to the foregoing corresponding method. Therefore, for beneficial effects that can be achieved by the electronic device, the computer storage medium, and the computer program product, reference may be made to beneficial effects in the foregoing corresponding method. Details are not described herein again.

### BRIEF DESCRIPTION OF DRAWINGS

FIG. 1 is a schematic diagram of a hardware structure of an electronic device according to an embodiment of this application;
FIG. 2 is a schematic diagram of a software structure and a hardware structure of an electronic device according to an embodiment of this application;
FIG. 3A is a flowchart I of a display screen control method according to an embodiment of this application;
FIG. 3B is an example diagram of a gamma curve corresponding to a display region a when an FPS brightness register is configured with different attribute values according to an embodiment of this application;
FIG. 4 is an example diagram I of a change in a display screen brightness in an unlocking scenario according to an embodiment of this application;
FIG. 5 is a flowchart II of a display screen control method according to an embodiment of this application;
FIG. 6 is an example diagram II of a change in a display screen brightness in an unlocking scenario according to an embodiment of this application;
FIG. 7 is a flowchart III of a display screen control method according to an embodiment of this application;
FIG. 8 is an example diagram III of a change in a display screen brightness in an unlocking scenario according to an embodiment of this application;
FIG. 9 is a flowchart IV of a display screen control method according to an embodiment of this application; and
FIG. 10 is a flowchart V of a display screen control method according to an embodiment of this application.

### DESCRIPTION OF EMBODIMENTS

In the following, terms "first" and "second" are merely used for description, and should not be construed as indicating or implying relative importance or implicitly indicating a quantity of technical features that are indicated. Therefore, features defined by "first" and "second" may explicitly or implicitly include one or more such features. In the descriptions of embodiments, unless otherwise stated, "a plurality of" means two or more.

Implementations of the embodiments are described in detail below with reference to the drawings.

Fingerprint unlocking indicates collecting fingerprint information of a user when the user intends, and identifying, based on the collected fingerprint information, whether the user has permission to unlock an electronic device. For example, common forms of fingerprint unlocking may include side fingerprint unlocking, rear fingerprint unlocking, front fingerprint unlocking, and in-display fingerprint unlocking.

During the in-display fingerprint unlocking, a fingerprint collection module used is configured under a display screen. A principle of collecting the fingerprint information by the fingerprint collection module is as follows. When a finger presses on the fingerprint collection module, a fingerprint image may be generated based on light reflected by the finger to the fingerprint collection module, to obtain corresponding fingerprint information.

In the foregoing fingerprint information collection process, backlight of the display screen needs to be used. In other words, in the fingerprint collection process, a specific region of the display screen needs to be kept in a lit state. The specific lit region may also be referred to as a fingerprint light spot.

In some embodiments, the foregoing fingerprint light spot may be classified into two types: a hard light spot and a soft light spot.

Soft light spot: After the entire display screen is lit, a pre-configured mask may be displayed, so that a fingerprint light spot is presented on the display screen, namely, a soft light spot is formed. The foregoing mask is a black layer. The mask does not cover the display region of a display screen (a display region of the fingerprint light spot) corresponding to the fingerprint collection module. In this way, only the display region corresponding to the fingerprint light spot is lit visually.

Hard light spot: A part of a display region of a display screen is lit, or a brightness of a part of a display region is increased, so that a light spot is presented on the display screen. For example, the display region corresponding to the fingerprint collection module is lit, or the brightness of the display region corresponding to the fingerprint collection module is increased. In this way, the fingerprint light spot is presented on the display screen visually. In other words, the hard light spot is formed. The brightness of the fingerprint light spot is higher than that of another display region.

Regardless of the hard light spot or the soft light spot, a brighter fingerprint light spot indicates higher identifiability of collected fingerprint information. Particularly, when an electronic device is in a high brightness environment, the foregoing advantage becomes more obvious.

In some embodiments, after detecting that an ambient light brightness value of a space in which the electronic device is located is greater than a preset brightness value, the electronic device instructs the display screen to enter a high brightness mode (HBM).

HBM mode: A brightness of an entire screen or a local region of a display screen is increased, so that the brightness of the entire display screen or the local region reaches a target brightness value. The foregoing target brightness value may be pre-configured, and the target brightness value is usually greater than a conventional maximum brightness value (for example, referred to as a first brightness value of the display screen). The foregoing conventional maximum brightness value may be a maximum brightness value that can be reached by the display screen in a non-HBM mode.

For example, when the electronic device enables the soft light spot to assist in completing fingerprint collection, the electronic device may instruct the display screen to increase a backlight brightness of the entire screen to a target brightness value (referred to as a second brightness value) during the configuration of the backlight brightness of the display screen, so that the display screen enters the HBM mode.

For another example, when the electronic device enables the hard light spot to assist in completing fingerprint collection, the electronic device may instruct the display screen to increase the brightness of the local region, for example, instruct the display screen to increase the brightness of the local region to the target brightness value, so that the display screen enters the HBM mode.

After the display screen enters the HBM mode, an identifiable rate of collected fingerprint information can be effectively improved, thereby improving a success rate of fingerprint unlocking in a bright light environment.

However, although some display screens have a capability of increasing the brightness to the target brightness value, the display screens do not support the HBM mode. For example, the brightness value sent by the display driver to the display screen is not greater than a conventional maximum brightness value, so that the display screen cannot improve the brightness of the fingerprint light spot to the target brightness value. It may be learned that if the electronic device enables the hard light spot to assist in fingerprint collection, a relatively highlighted fingerprint light spot cannot be formed in the high brightness environment, namely, a problem that the HBM mode cannot be enabled arises, thereby reducing a success rate of fingerprint unlocking in the high brightness environment.

To resolve the foregoing problem, embodiments of this application provide a display screen control method. The method is applied to an electronic device that enables the hard light spot. The foregoing electronic device may dynamically modify a value of a specific brightness register in the display screen, and the foregoing specific brightness register may be configured to correct the brightness of the display region of the hard light spot (referred to as the light spot region for short). By modifying the specific brightness register, the brightness of the light spot region can be increased to the target brightness value when the display screen needs to enter the HBM mode. In this way, a display screen that originally does not support the HBM mode can also enter the HBM mode.

In addition, after the display screen needs to exit the HBM mode, the brightness of the light spot region may also be limited to below the conventional maximum brightness value by modifying the specific brightness register. The foregoing light spot region corresponds to a configuration position of the fingerprint collection module on the screen. When the finger of the user contacts the light spot region, namely, when the user intends to collect the fingerprint information, the fingerprint collection module on the screen may collect the fingerprint information of the finger covering the light spot region.

For example, the electronic device in embodiments of this application may be a device that has a display screen, for example, a portable computer (such as a mobile phone), a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or a media player. A specific form of the electronic device is not specially limited in embodiments of this application.

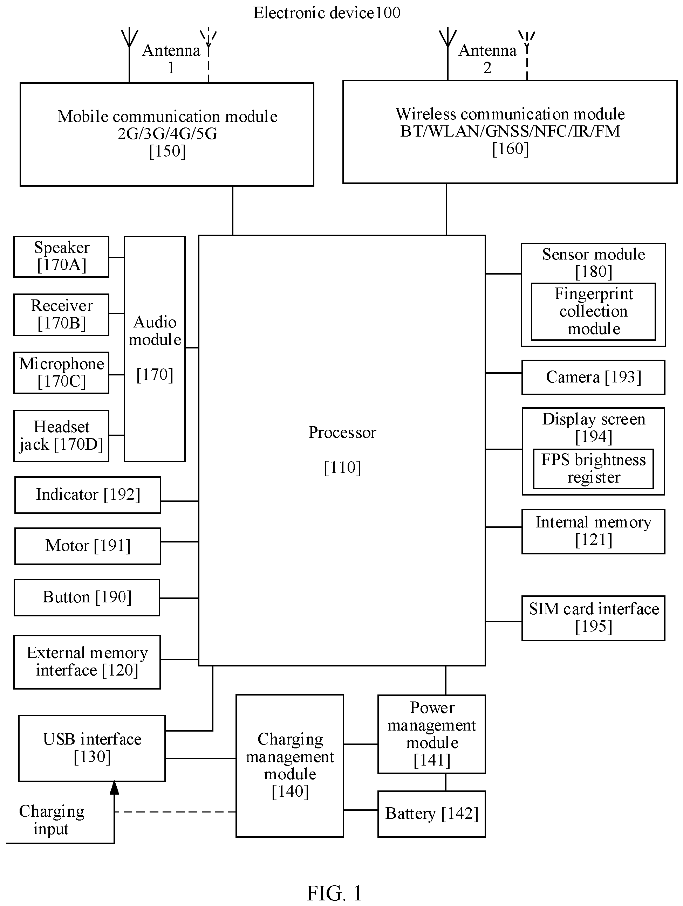

Refer to FIG. 1. FIG. 1 is a schematic diagram of a possible hardware structure of an electronic device.

As shown in FIG. 1, an electronic device 100 may include a processor 110, an external memory Interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like.

The foregoing sensor module 180 may include sensors such as a pressure sensor, a gyroscope sensor, a barometric pressure sensor, a magnetic sensor, an acceleration sensor, a distance sensor, a proximity light sensor, a fingerprint sensor (may also referred to as a fingerprint collection module), a temperature sensor, a touch sensor, an ambient light sensor, and a bone conduction sensor.

It may be understood that the structure shown in this embodiment does not constitute a specific limitation on the electronic device 100. In some other embodiments, the electronic device 100 may include more or fewer components than those shown in the figure, or some merged components, or some split components, or different component arrangements. The components in the figure may be implemented by hardware, software or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be devices independent of each other, or may be integrated in one or more processors.

The controller may be a nerve center and a command center of the electronic device 100. The controller may generate an operation control signal based on instruction operation code and a sequence signal, and control obtaining and executing of an instruction.

A memory may be further arranged in the processor 110, which is configured to store an instruction and data. In some embodiments, the memory in the processor 110 is a cache memory. The memory may store an instruction or data that is recently used or cyclically used by the processor 110. If the processor 110 needs to use the instruction or the data again, the processor may directly invoke the instruction or the data from the memory. Repeated access is avoided, and waiting time of the processor 110 is reduced, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that a schematic interface connection relationship between the modules in this embodiment is merely an example for description, and constitutes no limitation on the structure of the electronic device 100. In some other embodiments, the electronic device 100 may alternatively use an interface connection manner different from that in the foregoing embodiment, or use a combination of a plurality of interface connection manners.

The electronic device 100 implements a display function through the GPU, the display screen 194, the application processor, and the like. The GPU is an image processing microprocessor, and is connected to the display screen 194 and the application processor. The GPU is configured to perform mathematical and geometric calculation, and is configured to perform graphics rendering. The processor 110 may include one or more GPUs, and is configured to execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a miniLED, a microLED, a micro-OLED, a quantum dot light emitting diode (quantum dot light emitting diodes, QLED), or the like. In the following embodiments, an example in which the display screen 194 is the LCD is mainly used. In this way, it may be understood that, in the subsequent embodiments, the LCD mentioned may also be equally replaced with a display screen of another type. In addition, the foregoing display screen 194 may include a plurality of registers, for example, finger print sensor (finger print sensor, FPS) brightness registers.

The electronic device 100 may implement a photographing function through the ISP, the camera 193, the video codec, the GPU, the display screen 194, the application processor, and the like.

The ISP is configured to process data fed back by the camera 193. For example, during photographing, a shutter is enabled. Light is transmitted to a photosensitive element (an image sensor) of the camera through a lens, and an optical signal is converted into an electrical signal. The photosensitive element of the camera transmits the electrical signal to the ISP for processing, and the electrical signal is converted into an image visible to a naked eye. The ISP may further perform algorithm optimization on a noise point, a brightness, and a skin tone of the image. The ISP may further optimize parameters such as exposure and a color temperature of a shooting scenario. In some embodiments, the ISP may be arranged in the camera 193.

The camera 193 is configured to capture a static image or a video. An optical image is generated for an object through the lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 100 may include N cameras 193, N being a positive integer greater than 1.

The digital signal processor is configured to process a digital signal, and may further process another digital signal in addition to a digital image signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 can play or record videos in various encoding formats, for example, moving picture experts group (moving picture experts group, MPEG) 1, MPEG2, MPEG3, and MPEG4.

The NPU is a neural-network (neural-network, NN) computing processor that processes input information rapidly by referring to a structure of a biological neural network, for example, by referring to a transmission mode between human brain neurons, and can further perform self-learning continuously. Applications such as intelligent cognition of the electronic device 100, for example, image recognition, facial recognition, speech recognition, and text understanding, may be implemented through the NPU.

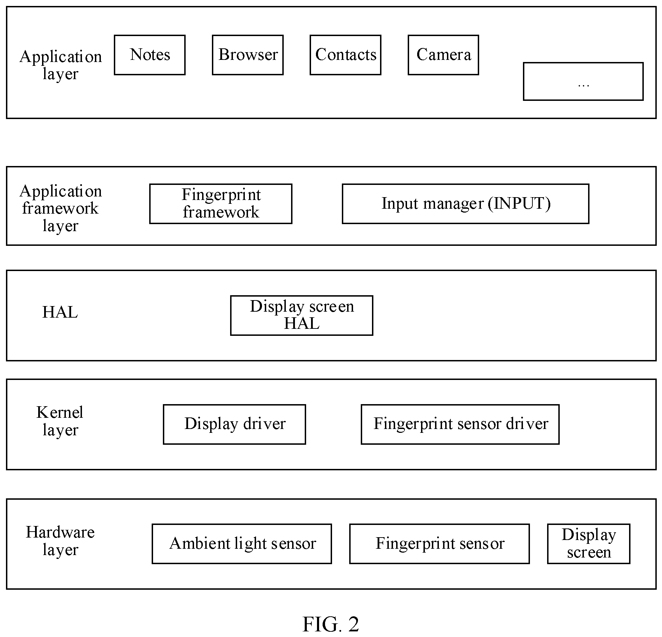

FIG. 2 is a block diagram of a software structure and a hardware structure of an electronic device 100 according to an embodiment of this application. In a layered architecture, a part of the software structure may be divided into several layers, and each layer has a clear role and task. The layers communicate with each other through a software interface. In some embodiments, the electronic device may include an application layer (also referred to as an application layer for short), an application framework layer (framework), a hardware abstraction layer (hardware abstract layer, HAL), a kernel layer, and the like. Certainly, the software layers obtained by dividing the electronic device may further include layers not shown in FIG. 2, such as a system library (libraries) and Android^{™} runtime (Android Runtime).

For example, the foregoing application layer may include a series of applications.

As shown in FIG. 2, the foregoing application layer may include applications such as notes, browser, contacts, and camera.

For example, the application framework layer provides an application programming interface (application programming interface, API) and a programming framework for the applications in the application layer. The application framework layer includes some predefined functions.

As shown in FIG. 2, the foregoing application framework layer may include a fingerprint framework, an input manager (INPUT manager), and the like.

The fingerprint framework is configured to provide an ability for processing a fingerprint service, such as performing fingerprint recognition. For another example, it is determined whether the HMB mode needs to be enabled.

The INPUT manager, which also referred to as an INPUT, may be configured to perform processing such as translation and encapsulation on an original INPUT event collected by various hardware modules, to obtain an input event containing more information, and transfer the input event to an application or a service that subscribe to events reported by the hardware module. For example, the foregoing various hardware modules may include a display screen, a fingerprint sensor (or be referred to as a fingerprint collection module), an ambient light sensor, a button, and the like. When the foregoing hardware modules are available, a device node corresponding to each of the hardware modules may be created. When the hardware module detects a corresponding original input event, for example, the fingerprint sensor detects a user tapping the fingerprint sensor, the display screen detects a user click operation, the ambient light sensor detects ambient light, or the button detects a user tapping operation, the original input event may be transmitted to a device node corresponding to the hardware module. The device node performs processing such as translation and encapsulation on the original input event. Finally, an encapsulation time obtained through processing is transmitted to an application, a service, or the like that subscribes to the event from the hardware module. For example, in this embodiment of this application, the fingerprint framework may subscribe to an event from the fingerprint sensor through the INPUT.

For example, the foregoing HAL layer may encapsulate drivers of various hardware modules (for example, the fingerprint sensor, the ambient light sensor, and the display screen), provide an invoking interface to the application framework layer, and shield implementation details of lower-layer hardware. As shown in FIG. 2, the HAL layer may include a display screen HAL. The display screen HAL may be an interface provided by the application framework and configured to invoke the display driver. In this way, when a framework, a service and the like of the application framework layer need to manage the display screen (for example, adjust a brightness of the display screen or control content displayed on the display screen), the framework, the service, and the like of the application framework layer may be implemented by invoking the display screen HAL.

For example, the kernel layer is located beneath the HAL, and is a layer between hardware and software. The kernel layer may include, in addition to the foregoing display driver and the fingerprint sensor driver, a camera driver, an audio driver, various sensor drivers, and the like. This is not limited in this embodiment of this application.

In some embodiments, the foregoing hardware layer may include various hardware modules integrated in the electronic device, for example, the ambient light sensor, the fingerprint sensor, and the display screen shown in FIG. 2. Certainly, the hardware layer may further include a hardware module not shown in FIG. 2.

Implementation details of the method provided in embodiments of this application are described below with reference to the accompanying drawings.

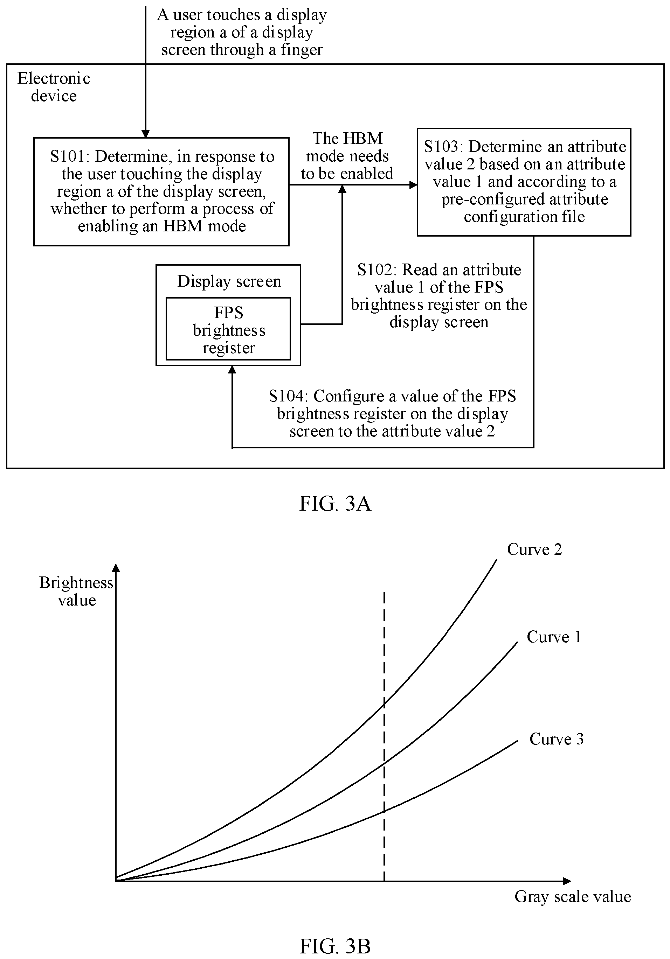

In some embodiments, when an electronic device is in a bright environment and in a lock screen state, as shown in FIG. 3A, the foregoing display screen control method may include the following steps.

S101: Determine, in response to a user touching a display region a of a display screen, whether to perform a process of enabling an HBM mode.

In some embodiments, in response to the user touching the display region a of the display screen, an ambient light brightness value of a space in which an ambient light sensor is located is obtained through the ambient light sensor. For example, the foregoing display region a may be a display region of the display screen located above a fingerprint collection module (a fingerprint sensor). The display region overlaps with a sensing surface of the fingerprint sensor, and may also be referred to as a first region.

After the ambient light brightness value is obtained, a target backlight brightness value (a first backlight brightness) corresponding to the ambient light brightness value is determined. In some embodiments, the electronic device may pre-configure a correspondence between different ambient light brightness values and different backlight brightness values. After a current ambient light brightness value is obtained, a corresponding target backlight brightness value is searched for based on the current ambient light brightness value and the pre-configured correspondence. When the target backlight brightness value is greater than a brightness threshold 1 (a third brightness value) corresponding to the display screen, it is determined to perform the process of enabling the HBM mode, and the process enters S102.

The brightness threshold 1 is a value configured in the display screen, and the value of the foregoing brightness threshold 1 is close to the conventional maximum brightness value corresponding to the display screen. For example, a difference between the conventional maximum brightness value and the brightness threshold 1 may be less than a preset threshold. For example, the conventional maximum brightness value is 3800 nits, the preset value is 50 nits, and the corresponding brightness threshold 1 is 3750 nits.

It may be understood that nit is a unit used to measure the brightness perceived by a user, or referred to as candela per square meter (cd/m2). In another embodiment, the foregoing brightness may also be represented by a display brightness value (display brightness value, DBV). The DBV is a level concept for describing a screen brightness in a display driver IC (display driver IC, DDIC), and may include 4096 levels (for example, levels 0-4095). When a gray scale value of a pixel point in a to-be-displayed image is fixed, a larger DBV indicates a brighter screen. The nit and the DBV may be converted into each other.

It may be understood that the conventional maximum brightness of different display screens may be different. Additionally, the set value may also be different. Correspondingly, different display screens may correspond to different brightness thresholds 1.

In addition, during a screen-on period of the electronic device, the backlight brightness of the display screen may be controlled in real time based on the ambient light brightness value of the environment. As described in the foregoing embodiment, a correspondence between the ambient light brightness value and the backlight brightness value is pre-configured in the electronic device. Based on the foregoing correspondence, the electronic device may control the backlight brightness of the display screen to change with the ambient light brightness value.

For example, the electronic device may obtain a real-time ambient light brightness value through the ambient light sensor, and search for a corresponding backlight brightness value with reference to a pre-configured correspondence. Then, the electronic device may send the found backlight brightness value to the display screen, to control the backlight brightness of the display screen.

In another embodiment, after detecting that the user touches the display region a of the display screen, the electronic device may further search, in response to the user touching the display region a of the display screen, for the backlight brightness value sent to the display screen last time. If the backlight brightness value sent to the display screen last time is greater than the brightness threshold 1, it is determined to perform the process of enabling the HBM mode, and the process enters S102.

In some other embodiments, in response to the user touching the display region a of the display screen, an ambient light brightness value of a space in which an ambient light sensor is located is obtained through the ambient light sensor. When the ambient light brightness value is greater than a preset brightness threshold (a first brightness threshold), it is determined to perform the process of enabling the HBM mode. In other words, the process enters S102.

The foregoing preset brightness threshold may be an empirical value, or may be an ambient light brightness value that may affect fingerprint recognition determined through a test.

S102: Read an attribute value 1 of a brightness register of a finger print sensor (finger print sensor, FPS) on the display screen.

In some embodiments, the foregoing FPS brightness register (a target brightness register) may be configured to manage the brightness corresponding to the display region a. When different attribute values are configured in the FPS brightness register, pixel units in the display region a correspond to different gamma curves. The gamma curves may indicate correspondences between different gray scale values and different brightnesses. It may be understood that one pixel unit corresponds to three gray scale values, namely, a gray scale value corresponding to a red channel, a gray scale value corresponding to a blue channel, and a gray scale value corresponding to a green channel. When the gamma curve corresponding to the pixel unit remains unchanged, a smaller gray scale value of one channel in the pixel unit indicates a lower brightness of an organic light-emitting diode (organic light-emitting diode, OLED) corresponding to that channel, and a larger gray scale value of one channel indicates a higher brightness of the OLED corresponding to the channel. When three gray scale values corresponding to one pixel unit are all increased, the brightnesses of three OLEDs corresponding to the pixel unit all increase, so that an actual brightness of the pixel unit can be increased.

As shown in FIG. 3B, when the attribute value 1 (the first attribute value) is configured in the FPS brightness register, the gamma curve corresponding to the display region a is a curve 1 in FIG. 3B. After the attribute value of the FPS brightness register is modified, the gamma curve corresponding to the display region a may be a curve 2 or a curve 3 in FIG. 3B.

An example in which the gamma curve corresponding to the display region a is the curve 2 after the FPS brightness register is modified to another attribute value (for example, the attribute value 2 and reference is made to a subsequent embodiment for details) from the attribute value 1 is used. A pixel unit in the display region a reaches a higher brightness with a same gray scale value after the attribute value of the FPS brightness register is modified.

An example in which a gamma curve corresponding to the display region a is the curve 3 after the FPS brightness register is modified to another attribute value from the attribute value 1 is used. The pixel unit in the display region a reaches a lower brightness with a same gray scale value after the attribute value of the FPS brightness register is modified.

Before and after the FPS brightness register is configured to another attribute value from the attribute value 1, the brightness values reached by the pixel unit in the display region a are different at a same gray scale value. It may be referred to that the brightness values of the display region a are corrected. When the gray scale value corresponding to the display region a remains unchanged, a difference between brightnesses that is reached before and after the attribute value of the FPS brightness register is modified may be referred to as a first brightness increment. In addition, register addresses of the FPS brightness register on different display screens may be different. For an implementation of reading the attribute value of the FPS brightness register, reference may be made to implementation details of reading a configuration parameter from a register of a display screen in the related technology. Details are not described herein again.

S103: Determine an attribute value 2 based on the attribute value 1 and according to a pre-configured attribute configuration file.

In some embodiments, a plurality of attribute configuration files (pre-configured configuration files) for the display screen may be pre-configured in the electronic device, where different attribute configuration files correspond to different types of display screens. For example, different attribute configuration files may be associated with type information of different types of display screens. The foregoing attribute configuration file includes an attribute modification value (an off set or an attribute correction value) for the FPS brightness register. The foregoing off set may be used to modify the attribute value of the FPS brightness register. For example, an attribute value 2 is obtained by adding the off set to an attribute value 1. For example, the attribute value is referred to as a second attribute value.

In some embodiments, a corresponding attribute configuration file 1 is searched for based on the type information of the display screen. An off set1 corresponding to the FPS brightness register is found from the attribute configuration file 1. The attribute value 1 and the offset1 are superposed to obtain the attribute value 2.

S104: Configure a value of the FPS brightness register on the display screen to the attribute value 2.

In some embodiments, an FPS node function may be invoked to instruct the FPS brightness register in the display screen to enter an editable state. In this way, the attribute value 2 may be written to the FPS brightness register. The attribute value 2 is written to the FPS brightness register. Then, the FPS brightness register is instructed to exit the editable state.

It may be understood that after the FPS brightness register is modified to the attribute value 2 from the attribute value 1, the gamma curve corresponding to the pixel unit in the display region a may change to the curve 2 (or a corresponding gamma curve with a greater brightness value at the same gray scale value) from the curve 1.

In this way, when the value of the FPS brightness register is the attribute value 1, the maximum brightness that can be reached by the pixel unit in the display region a is the conventional maximum brightness. For example, when the pixel unit in the display region a reaches the maximum gray scale value, the actual brightness value is the conventional maximum brightness. After the value of the FPS brightness register is modified to the attribute value 2, the maximum brightness that can be reached by the display region a may exceed the conventional maximum brightness. For example, when the pixel unit in the display region a reaches the maximum gray scale value, the actual brightness value is the target brightness value.

For example, after S104, when the electronic device determines that the pixel unit in the display region a needs to reach the maximum gray scale value, the brightness of the display region a may exceed the conventional maximum brightness limited by a specification of the display screen, and reach the target brightness value.

For example, due to a limitation of the display screen, the brightness value that the display driver may send to the display screen cannot exceed 3800 nits. In other words, the conventional maximum brightness value is 3800 nits. When the FPS brightness register is at the attribute value 1, the display driver sends brightness configuration information for the display region a to the display screen. The brightness configuration information carries 3800 nits. Correspondingly, the display screen may control the brightness of the display region a to reach 3800 nits. When the FPS brightness register is at the attribute value 2, the display driver sends brightness configuration information for the display region a to the display screen. The brightness configuration information carries 3800 nits. Correspondingly, the display screen can control the brightness value of the display region a to reach 3900 nits. It may be understood that after the value of the FPS brightness register is updated to the attribute value 2 from the attribute value 1, the brightness configuration information (instructing to adjust the brightness to 3800 nits) from the display driver is received, and that the gray scale value of the pixel unit in the display region a is adjusted to the maximum gray scale value is determined. At the maximum gray scale value, compared with the value of the FPS brightness register being the attribute value 1, the brightness of the display region a may be increased by 100 nits. In other words, the actual brightness is corrected by 100 nits, namely, the first brightness increment is 100 nits.

Once the FPS brightness register is configured to the attribute value 2, the display screen corrects only the brightness value of the display region a, and does not affect another region (for example, the second region on the display screen). When the brightness value of the display region a reaches the target brightness value, the brightness of another region of the display screen does not exceed the conventional maximum brightness value. In this way, the display screen forms a fingerprint light spot in the display region a. In this scenario, it may be referred to that the display screen enters the HBM mode. The conventional maximum brightness value is lower than the target brightness value.

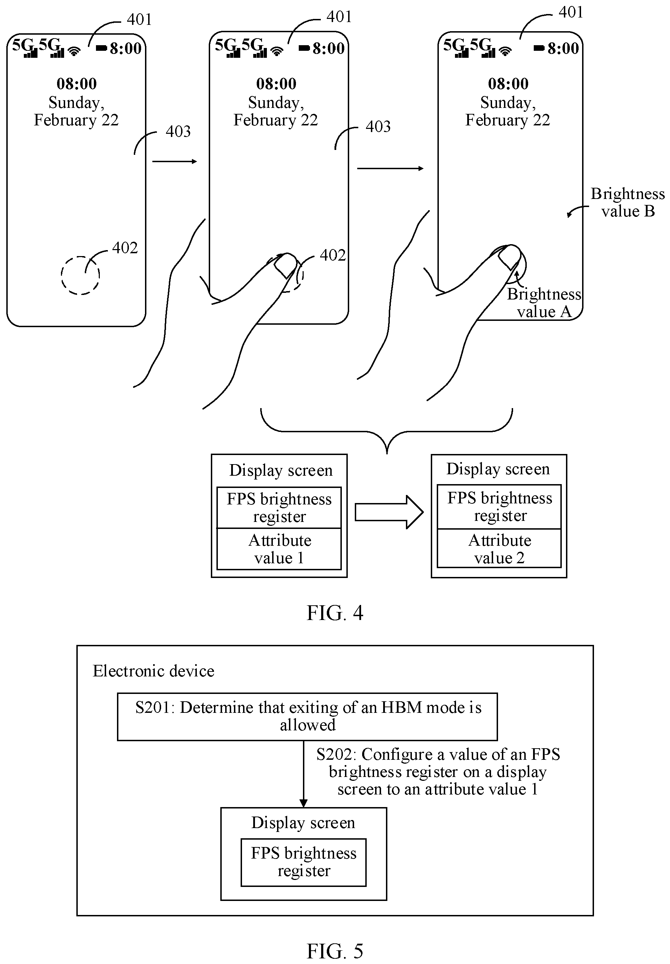

As shown in FIG. 4, an example scenario is that the electronic device displays a lock screen interface 401. It may be understood that during a period of displaying the lock screen interface 401, the electronic device remains in an unlocked state. After the user places a finger on the display region a (for example, a region 402 in FIG. 4), the brightness of the display region a (such as the region 402) is the brightness value A, the brightness of another region is a brightness value B, and the brightness value A is greater than the brightness value B. The another region may be a display region other than the region 402 in the display screen, for example, a region 403 in FIG. 4.

In the foregoing example scenario, if the ambient light brightness value in the space in which the electronic device is located may trigger to adjust the backlight brightness of the display screen to the conventional maximum brightness value, and after the user places the finger in the region 402, as shown in FIG. 4, the electronic device may write the attribute value 2 to the display screen. Then, the brightness value A of the foregoing region 402 may reach the target brightness value, and the brightness value B of the foregoing region 403 does not exceed the conventional maximum brightness value. In this scenario, the display screen of the electronic device can successfully enter the HBM mode. Thus, as shown in FIG. 4, before and after the HBM mode is entered, the value of the FPS brightness register in the display screen changes from the attribute value 1 to the attribute value 2.

In the foregoing example scenario, if the ambient light brightness value in the space in which the electronic device is located does not trigger to adjust the backlight brightness of the display screen to the conventional maximum brightness value, and after the user places the finger on the region 402, the electronic device does not write the attribute value for the FPS brightness register to the display screen. Then, the brightness value A of the region 402 and the brightness value B of the region 403 both do not exceed the conventional maximum brightness value.

In another embodiment, the foregoing method may further be applicable to a scenario in which the electronic device is not in a high brightness environment, and the brightness of the display screen reaches the conventional maximum brightness, or is close to the conventional maximum brightness. For details, reference is made to the foregoing embodiments. Details are not described herein again.

In some embodiments, after the display screen enters the HBM mode, the fingerprint collection module may collect fingerprint information, or example, collect first fingerprint information. In the period, the collected fingerprint information has a higher identifiable rate. After the fingerprint collection module collects the fingerprint information with a high identification rate, the HBM mode may further be exited. For a process of exiting the HBM mode, reference is made to FIG. 5.

S201: Determine that exiting of an HBM mode is allowed.

In some embodiments, after fingerprint information collection is completed or fingerprint collection is interrupted, the electronic device may determine that the electronic device needs to exit the HBM mode.

For example, after a specified duration of entering the HBM mode, it may be determined that fingerprint information is obtained, and it is determined that the display screen needs to exit the HBM mode. The process enters S202 shown in FIG. 5. The foregoing specified duration may be a maximum duration obtained by a test and required by the fingerprint collection module to collect the fingerprint information.

For another example, when the fingerprint information is obtained and a fingerprint recognition result is obtained (for example, fingerprint unlocking succeeds or fingerprint unlocking fails) after the HBM mode is entered, it may be determined that the fingerprint information is collected, and that the display screen needs to exit the HBM mode, and the procedure enters S202 shown in FIG. 5.

For still another example, after the HBM mode is entered, it is detected that the finger of the user leaves the display region a, and it is determined that the display screen needs to exit the HBM mode.

For yet another example, after the HBM mode is entered, if a screen-off operation indicated by the user is detected, it may also be determined that the HBM mode is exited.

S202: Configure a value of the FPS brightness register on the display screen to the attribute value 1.

In some embodiments, an FPS node function may be invoked to instruct the FPS brightness register in the display screen to enter an editable state. In this way, the attribute value 1 may be written to the FPS brightness register. The attribute value 1 is written to the FPS brightness register. Then, the FPS brightness register is instructed to exit the editable state.

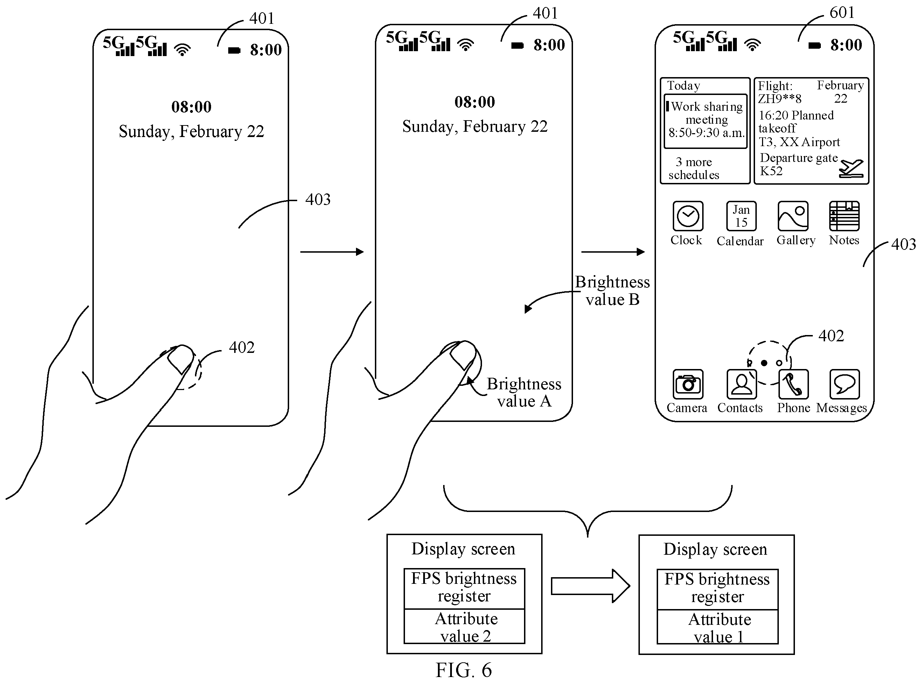

For example, in a scenario, an example in which the fingerprint unlocking result is successful unlocking is used. As shown in FIG. 6, after the user places the finger in a region 402, a brightness of the region 402 is a brightness value A, a brightness of another region (a region 403) is a brightness value B, the brightness value A is greater than the brightness value B, and the brightness value A is a target brightness value. In this scenario, the display screen enters the HBM mode, and the fingerprint collection module may also collect the fingerprint information. After the fingerprint information collection is ended, the electronic device may write the attribute value 1 to the FPS brightness register of the display screen.

In response to the value of the FPS brightness register being the attribute value 1, the display screen stops correcting the brightness of the display region a, so that the brightness of the display region a does not exceed a conventional maximum brightness value, and the display screen exits the HBM mode.

As shown in FIG. 6, based on the successful unlocking through the collected fingerprint information, the electronic device displays a user interface 601. After the HBM mode is entered, a value of the FPS brightness register is an attribute value 2. Once the user interface 601 is displayed, the value of the FPS brightness register is the attribute value 1. In other words, before displaying the user interface 601, the electronic device may change the value of the FPS brightness register from the attribute value 2 to the attribute value 1. In this way, during display of the user interface 601, both the brightness of the region 402 and the region 403 of the display screen do not exceed the conventional maximum brightness value.

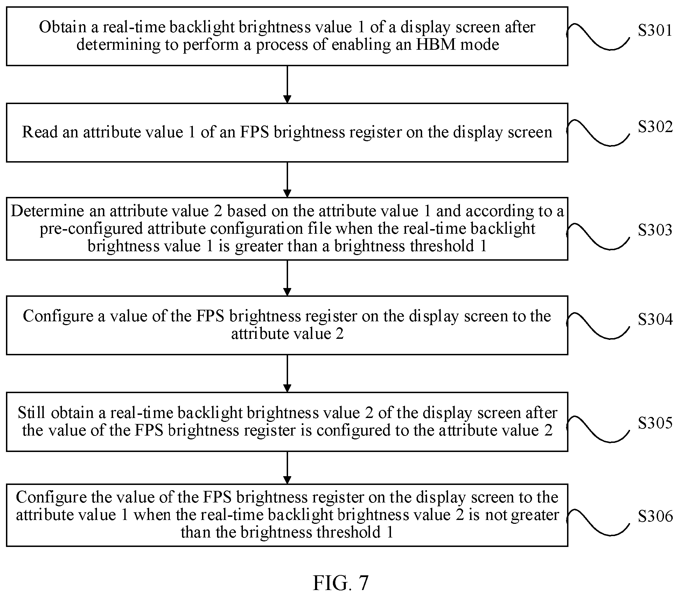

In some embodiments, as shown in FIG. 7, the foregoing method may further include the following steps.

S301: Obtain a real-time backlight brightness value 1 of a display screen after determining to perform a process of enabling an HBM mode.

In some embodiments, reference may be made to S101 for the process of determining whether to enable the HBM mode. Details are not described herein again. The backlight brightness may represent a brightness condition of an entire display screen. The foregoing real-time backlight brightness value is a quantization value corresponding to the brightness of the entire screen and a current display screen. An electronic device may read the real-time backlight brightness value from the display screen. For a reading process, reference may be made to related technologies. Details are not described herein again.

For example, after determining that the HBM mode needs to be enabled, the electronic device may periodically read the real-time backlight brightness value 1 from the display screen, namely, may read one or more real-time backlight brightness values 1 from the display screen.

For another example, if it is determined that the HBM mode needs to be enabled, the electronic device reads the real-time backlight brightness value 1 from the display screen after an interval duration 1. Based on the above, the manner of collecting the real-time backlight brightness value 1 is not specifically limited.

S302: Read an attribute value 1 of an FPS brightness register on the display screen.

In some embodiments, for implementation details of S302, reference may be made to S102, and there is no necessary sequence between S301 and S302. This is not specifically limited herein.

S303: Determine an attribute value 2 based on the attribute value 1 and according to a pre-configured attribute configuration file when the real-time backlight brightness value 1 is greater than a brightness threshold 1.

In some embodiments, in a case that the electronic device periodically obtains the real-time backlight brightness value 1, the electronic device waits for a next period to obtain a new real-time backlight brightness value 1 when the obtained real-time backlight brightness value 1 (a first real-time backlight brightness) is not greater than the brightness threshold 1 (a third brightness value) and the real-time backlight brightness value 1 gradually increases, and determines whether the new real-time backlight brightness value 1 is greater than the brightness threshold 1. When the real-time backlight brightness value 1 is not greater than the brightness threshold 1 and the real-time backlight brightness value 1 remains unchanged or decreases, the process ends.

In some other embodiments, after the interval duration 1, the obtained real-time backlight brightness value 1 is not greater than the brightness threshold 1, and the process ends.

S304: Configure a value of the FPS brightness register on the display screen to the attribute value 2.

In some embodiments, in S303 and S304, for implementation details of calculating the attribute value 2 and writing the attribute value 2 to the FPS brightness register, reference may be made to S103 and S104. Details are not described herein again.

In some embodiments, before the value of the FPS luminance register is modified, whether the display screen still currently has a requirement for enabling the HBM mode is determined by determining whether the real-time backlight brightness value is greater than the brightness threshold 1, to avoid abnormal brightness display on the display screen caused by erroneous modification.

In an example scenario, the display driver sends a target backlight brightness value to the display screen, and the target backlight brightness value is greater than the brightness threshold 1. The electronic device may determine that the process of enabling the HBM mode needs to be performed based on the target backlight brightness value. After the display screen sends the target backlight brightness value, the display screen does not adjust the backlight brightness to the target backlight brightness value. For example, after the display screen sends the target backlight brightness value, it is detected that the user presses a power button, the backlight brightness of the display screen quickly decreases. In this scenario, based on the method shown in S301 to S304, the detected real-time backlight brightness value 1 fails to reach the brightness threshold 1. In response to the real-time backlight brightness value 1 not reaching the brightness threshold 1, the value of the FPS brightness register is not changed, to avoid abnormal high brightness in a region 402.

In an example scenario, the display driver sends a target backlight brightness value to the display screen, and the target backlight brightness value is greater than the brightness threshold 1. The electronic device may determine that the process of enabling the HBM mode needs to be performed based on the target backlight brightness value. After the display screen sends the target backlight brightness value, the display screen does not adjust the backlight brightness to the target backlight brightness value. For example, after the display screen sends the target backlight brightness value, it is detected that a finger of the user leaves the display region a, and it is determined that the user actively interrupts the fingerprint recognition. Based on a service rule of fingerprint recognition, the display screen enters a low brightness mode. In other words, the brightness of the display screen is reduced. In this scenario, based on the method shown in S301 to S304, the detected real-time backlight brightness value 1 also fails to reach the brightness threshold 1. In response to the real-time backlight brightness value 1 not reaching the brightness threshold 1, the value of the FPS brightness register is not changed.

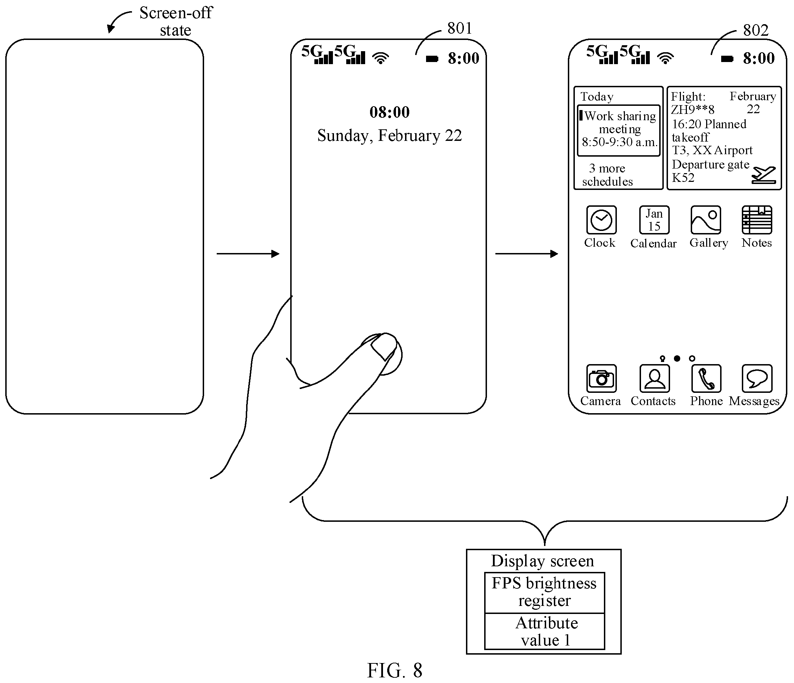

In another example scenario, as shown in FIG. 8, when the electronic device is off the screen, the electronic device detects that the user intends to perform fingerprint unlocking, the electronic device, and may display a screen unlocking interface 801. When the screen unlocking interface 801 is displayed, because most pixel points in the region 403 of the display screen remain unlit, a corresponding backlight brightness is relatively low. In this scenario, fingerprint information with a high identification rate can be collected even if the HBM mode is not enabled. In other words, the brightness of the region 402 does not need to reach the target brightness value, for example, the brightness of the display region a is a fifth brightness value, and the fifth brightness value is less than or equal to the conventional maximum brightness value, and an obvious fingerprint light spot can also be formed, thereby improving a recognizable rate of fingerprint information collection. Based on the method shown in S301 to S304, the detected real-time backlight brightness value 1 does not reach the brightness threshold 1. In response to the real-time backlight brightness value 1 not reaching the brightness threshold 1, the value of the FPS brightness register is not changed.

In the scenario shown in FIG. 8, the real-time backlight brightness value of the display screen is not higher than the brightness threshold 1 in a period between a time when the finger of the user touches the region 402 and a time when the fingerprint information collection is completed. According to the method provided by the foregoing S301 to S304, the electronic device does not change the value of the FPS brightness register. In other words, the FPS brightness register is at the attribute value 1. When fingerprint information collection quality is not affected, the HBM mode is avoided from being unnecessarily enabled.

As shown in FIG. 8, when the unlocking succeeds, the electronic device may display a user interface 802. In a period from displaying the screen unlocking interface 801 to displaying the user interface 802 of the electronic device, a value of an FPS brightness register of the display screen remains unchanged.

S305: Still obtain a real-time backlight brightness value 2 of the display screen after the value of the FPS brightness register is configured to the attribute value 2.

It may be understood that the real-time backlight brightness value 2 may also be referred to as a second real-time backlight brightness. After the fingerprint unlocking ends, for example, after the unlocking succeeds or the unlocking fails, the display driver instructs the display screen to enter a low-brightness display mode based on a service logic of unlocking. In other words, the backlight brightness of the display screen is reduced.

S306: Configure the value of the FPS brightness register on the display screen to the attribute value 1 when the real-time backlight brightness value 2 is not greater than the brightness threshold 1.

In some embodiments, after the value of the FPS brightness register on the display screen is configured to the attribute value 1, the brightness of a region 402 is no longer corrected. In other words, the brightness of the region 402 may be limited below the conventional maximum brightness value, so that abnormal brightness display of the display screen is avoided.

In another possible embodiment, after S304, S305 and S306 may not be performed. After it is determined that the fingerprint unlocking ends, for example, in response to the fingerprint framework outputting a fingerprint recognition result, the value of the FPS brightness register on the display screen may be configured to the attribute value 1.

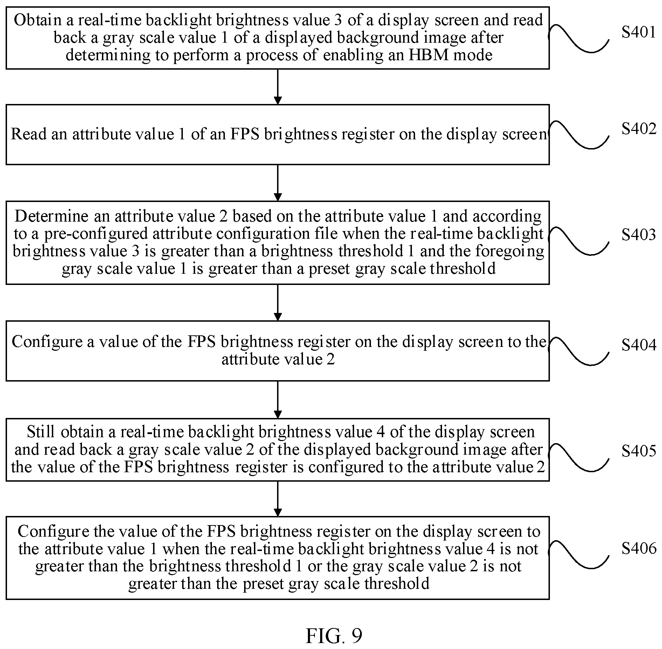

In some embodiments, as shown in FIG. 9, the foregoing method may further include the following steps.

S401: Obtain a real-time backlight brightness value 3 of a display screen and read back a gray scale value 1 of a displayed background image after determining to perform a process of enabling an HBM mode.

In some embodiments, reference may be made to S101 for the process of determining whether to enable the HBM mode. Details are not described herein again. If it is determined that the HBM mode needs to be enabled, the electronic device may further read the real-time backlight brightness value 3 of the display screen and the real-time gray scale value of the background image displayed in the display region a. For a reading manner, reference may be made to the related technology. Details are not described herein again.

It may be understood that the foregoing gray scale value 1 (a first gray scale value) may be an average gray scale of the background image displayed in the display region a in real time, or may be a maximum gray scale value. This is not specifically limited in this embodiment of this application. In addition, different preset gray scale thresholds may be configured for the average gray scale and the maximum gray scale. The foregoing preset gray scale threshold is used for evaluating whether the current state of the display screen still needs to enter the HBM mode. For specific details, reference is made to subsequent embodiments. Details are not described herein again.

S402: Read an attribute value 1 of an FPS brightness register on the display screen.

In some embodiments, for implementation details of S402, reference may be made to S102, and there is no necessary sequence between S401 and S402. This is not specifically limited herein.

S403: Determine an attribute value 2 based on the attribute value 1 and according to a pre-configured attribute configuration file when the real-time backlight brightness value 3 is greater than a brightness threshold 1 and the foregoing gray scale value 1 is greater than a preset gray scale threshold.

When a pixel unit in the display region a reaches the maximum gray scale value, the brightness of the display region a can reach the maximum brightness value that can be reached currently (for example, before the value of the FPS brightness register is modified, the maximum brightness that can be reached currently is the conventional maximum brightness). The foregoing preset gray scale value is not greater than the maximum gray scale value. For example, the preset gray scale threshold may be 0X1FF.

In addition, when the real-time backlight brightness value 3 is not greater than the brightness threshold 1 and the real-time backlight brightness value 3 gradually increases, a next period is waited to obtain a new real-time backlight brightness value 3 and whether the new real-time backlight value 3 is greater than the brightness threshold 1 is determined. When the real-time backlight brightness value 3 is not greater than the brightness threshold 1 and the real-time backlight brightness value 3 remains unchanged or decreases, the process ends.

Alternatively, when the gray scale value 1 is not greater than the preset gray scale threshold, the process ends.

S404: Configure a value of the FPS brightness register on the display screen to the attribute value 2.

In some embodiments, in S403 and S404, for implementation details of calculating the attribute value 2 and writing the attribute value 2 to the FPS brightness register, reference may be made to S103 and S104. Details are not described herein again.

It may be understood that, in the methods shown in FIG. 7 and FIG. 9, before the FPS brightness register is modified, whether the current state of the display screen satisfies the scenario condition to enter the HBM mode is determined based on the real-time backlight brightness value and/or the gray scale value of the background image, which may also be referred to as whether the current state of the display screen still has the requirement for enabling the HBM mode.

In another embodiment, whether the current state of the display screen satisfies the scenario condition to enter the HBM mode may also be determined in another manner. For example, before the attribute value 2 is calculated, it is determined that the scenario condition to enter the HBM mode is not satisfied if a pre-configured interrupt condition is detected, for example, it is detected that a user presses a power button, a finger leaves the display region a, or the brightness suddenly falls in a space environment in which the electronic device is located. If the foregoing pre-configured interrupt condition is not detected, it is determined that the scenario condition to enter the HBM mode is satisfied. If it is detected that the display screen is off the screen before unlocking, it may also be determined that the scenario condition to enter the HBM mode is not satisfied.

In this way, when the current state of the display screen satisfies the scenario condition to enter the HBM mode, the electronic device writes the attribute value 2 to the FPS brightness register, so that the display screen can achieve a display effect of the HBM mode.

S405: Still obtain a real-time backlight brightness value 4 of the display screen and read back a gray scale value 2 of the displayed background image after the value of the FPS brightness register is configured to the attribute value 2.

It may be understood that, after the fingerprint unlocking ends, for example, after the unlocking succeeds or the unlocking fails, the display driver instructs the display screen to enter a low-brightness display mode based on a service logic of unlocking. In other words, the backlight brightness of the display screen is reduced, and the gray scale value of the background image also decreases. The foregoing gray scale value 2 may also be referred to as a second gray scale value, and may be the gray scale value of the background image displayed in the display region a.

S406: Configure the value of the FPS brightness register on the display screen to the attribute value 1 when the real-time backlight brightness value 4 is not greater than the brightness threshold 1 or the gray scale value 2 is not greater than the preset gray scale threshold.

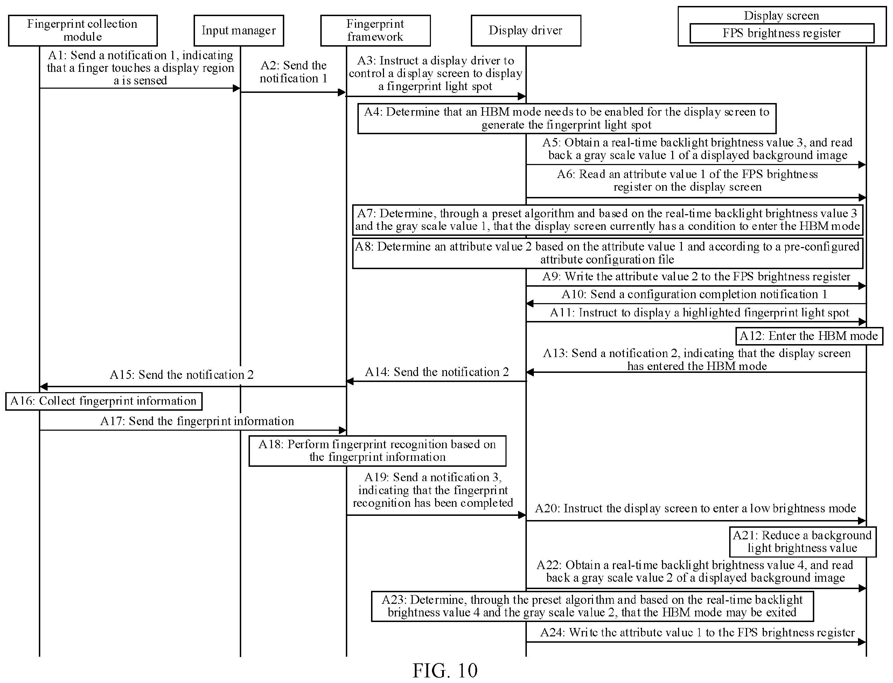

In an implementation, FIG. 10 shows that in a process of performing the method shown in FIG. 9, the signaling interaction between software and hardware modules in the electronic device is as follows.

A1: A fingerprint collection module sends a notification 1 to an input manager, indicating that a finger touches a display region a is sensed.

In some embodiments, when the fingerprint collection module senses that the finger touches the display region a, the fingerprint collection module may report the event to an input manager, for example, send the notification 1 to the input manager. When a fingerprint framework subscribes to a message from the fingerprint collection module through the input manager, the process may enter A2.

A2: The input manager sends the notification 1 to a fingerprint framework.

A3: The fingerprint framework instructs a display driver to control a display screen to display a fingerprint light spot.

In some embodiments, the fingerprint framework may invoke a function interface 1 provided by the display driver, and the function interface 1 may trigger a process of forming the fingerprint light spot. For example, after the function interface 1 is invoked, the display screen may be controlled to adjust the brightness of the display region a and another region (namely, a region outside the display region a), so that the brightness of the display region a and the another region represents a linear relationship, and the brightness of the display region a is higher than that of the another region. In this way, the fingerprint light spot may be formed on the display screen at the display region a. Certainly, in this embodiment of this application, for details from the time when the fingerprint framework invokes the function interface 1 provided by the display driver a to the time when the fingerprint light spot is formed on the display screen, reference is made to the following steps. Details are not described herein.

A4: The display driver determines that an HBM mode needs to be enabled on the display screen to generate the fingerprint light spot.

In some embodiments, for the foregoing A4, reference may be made to S101. For example, the display driver may obtain an ambient light brightness value of a space in which the display driver is located through an ambient light sensor. A target backlight brightness value corresponding to the ambient light brightness value is determined. When the target backlight brightness value is greater than a brightness threshold 1 corresponding to the display screen, it is determined that the fingerprint light spot needs to be generated in the HBM mode. Another example is not described herein again.

A5: The display driver obtains a real-time backlight brightness value 3 from the display screen, and reads back a gray scale value 1 of a displayed background image.

A6: The display driver reads an attribute value 1 of an FPS brightness register on the display screen from the display screen.

In some embodiments, for the foregoing A5 and A6, reference may be made to S401 and S402. Details are not described herein again.

A7: The display driver invokes a preset algorithm, and determines, based on the real-time backlight brightness value 3 and the gray scale value 1, that the display screen currently has a condition to enter the HBM mode.

In some embodiments, the foregoing preset algorithm can determine whether the display screen currently satisfies the condition to enter the HBM mode based on the real-time backlight brightness value and the gray scale value. For example, in the foregoing preset algorithm, the real-time backlight brightness value may be compared with the brightness threshold 1, and the gray scale value is compared with a preset gray scale threshold. Then, it is determined whether the display screen currently has the condition to enter the HBM mode through integrating a plurality of comparison results. For example, when the real-time backlight brightness value 3 is greater than the brightness threshold 1 and the foregoing gray scale value 1 is greater than the preset gray scale threshold, whether the display screen currently has a condition to enter the HBM mode is determined. In some other embodiments, the foregoing preset algorithm may further determine, based on a detected user behavior, a detected environment change, and/or a display state of the display screen before unlocking, whether the display screen currently has a condition to enter the HBM mode.

For example, when it is detected that a user is pressing the power button, a finger leaves the display region a, or the ambient light brightness of the space in which the electronic device is located suddenly decreases, it may be determined that the display screen currently does not currently meet the condition to enter the HBM mode based on the foregoing preset algorithm. In addition, in the foregoing preset algorithm, when the foregoing condition is not detected, it may be determined, based on the foregoing preset algorithm, that the display screen currently satisfies the condition to enter the HBM mode. The foregoing preset algorithm may also, when it is detected that the display state of the display screen before it is unlocked is a screen-off state, determine that the condition to enter the HBM mode is not satisfied based on the foregoing preset algorithm.

A8: The display driver determines an attribute value 2 based on the attribute value 1 and according to a pre-configured attribute configuration file.

A9: The display driver writes the attribute value 2 to the FPS brightness register on the display screen.

A10: The display screen sends a configuration completion notification 1 to the display driver.

The foregoing configuration completion notification 1 indicates that the display screen configures the value of the FPS brightness register to the attribute value 2.

A11: The display driver instructs the display screen to display a highlighted fingerprint light spot.

In some embodiments, the display driver may instruct the display screen to adjust the brightness values of the display region a and another region, so that a fingerprint light spot a whose brightness value reaching the target brightness value is formed on the display screen.

For example, when the target backlight brightness value is not less than a conventional maximum brightness value, the display driver sends brightness configuration information a (first brightness configuration information) for the display region a to the display screen. The brightness configuration information a may indicate that the display region a is to be adjusted to the conventional maximum brightness value.

After the FPS brightness register is configured to the attribute value 2, the display screen determines, in response to the brightness configuration information a, that a gray scale value of a pixel unit in the display region a needs to be adjusted to a maximum gray scale value. In other words, a target gray scale value determined by the display screen is the maximum gray scale value. Then, with reference to a curve 2 (a corresponding gamma curve when the FPS brightness register is at the attribute value 2) shown in FIG. 3B and the determined target gray scale value, the brightness of the display region a may be adjusted to the target brightness value (for example, the conventional maximum brightness value +100 nits). Obviously, in the foregoing process, the brightness of the display region a may also be referred to as the display screen being corrected.

In addition, the display driver may alternatively send brightness configuration information b for another region to the display screen. The brightness configuration information b may indicate that the another region is to be adjusted to the conventional maximum brightness value. The display screen determines, in response to the brightness configuration information b, that a gray scale value of a pixel unit in another display region needs to be adjusted to the maximum gray scale value. In other words, the target gray scale value determined by the display screen is the maximum gray scale value. Then, the brightness of the another region is adjusted to the conventional maximum brightness value with reference to the gamma curve of the another region and the target gray scale value.

For example, when the target backlight brightness value is less than the conventional maximum brightness value, the display driver sends the brightness configuration information a for the display region a to the display screen. The display screen may adjust the brightness of the display region a to the target brightness value (for example, the conventional maximum brightness value +100 nits) in response to the brightness configuration information a. The display driver may send brightness configuration information c for another region to the display screen. The brightness configuration information c may include the target backlight brightness value, to indicate that the another region is to be adjusted to the target backlight brightness value. The display screen may adjust the brightness of the another region to the target backlight brightness value in response to the brightness configuration information c.

A12: The display screen enters the HBM mode.

After the fingerprint light spot whose brightness value is the target brightness value is displayed on the display screen, the display screen enters the HBM mode.

A13: The display screen sends a notification 2 to the display driver, indicating that the display screen has entered the HBM mode.

A14: The display driver sends the notification 2 to the fingerprint framework.

A15: The fingerprint framework sends the notification 2 to the fingerprint collection module.

A16: The fingerprint collection module starts to collect fingerprint information in response to the notification 2.

A17: The fingerprint collection module sends the collected fingerprint information to the fingerprint framework.

A18: The fingerprint framework performs fingerprint recognition based on the fingerprint information.

For the foregoing process of fingerprint information collection and fingerprint recognition, reference may be made to related technologies. Details are not described herein again.

A19: The fingerprint framework sends a notification 3 to the display driver, indicating that fingerprint recognition has been completed.

A20: The display driver instructs the display screen to enter a low brightness mode.

A21: The display screen reduces a background light brightness value.

For example, the display driver may decrease backlight brightness of the display screen, so that the display screen enters the low brightness mode. During decreasing the backlight brightness of the display screen, the brightnesses of the display region a and the another region decrease.

A22: The display driver obtains a real-time backlight brightness value 4 from the display screen, and reads back a gray scale value 2 of a displayed background image.

A23: The display driver determines, through the preset algorithm and based on with reference to the real-time backlight brightness value 4 and the gray scale value 2, that exiting of the HBM mode is allowed.

In some embodiments, the preset algorithm in A23 may be the same as the preset algorithm in A7. When it is determined, through the preset algorithm, that the condition to enter the HBM mode is not satisfied, that exiting of the HBM mode is allowed is determined.

A24: The display driver writes the attribute value 1 to the FPS brightness register of the display screen.

After the attribute value 1 is written to the FPS brightness register of the display screen, the display screen no longer corrects the brightness of the display region a. For example, after the attribute value 1 is written to the FPS brightness register of the display screen, the display driver sends a brightness configuration file d (second brightness configuration information) for the display region a to the display screen. The brightness configuration file d carries a brightness value of 3000 nits (a fourth brightness value). The display screen determines the target gray scale value corresponding to the display region a in response to the brightness configuration file d. Then, with reference to a curve 1 shown in FIG. 3B and the determined target gray scale value, the brightness of the display region a may be configured to 3000 nits.

Through the foregoing method, even for a display screen having a defect, the HBM mode may be successfully entered when the in-display fingerprint unlocking is performed in the high brightness environment, thereby improving the success rate of the in-display fingerprint unlocking. In another embodiment, the foregoing method may alternatively be used only for the display screen having a defect. For example, after step A4, the display driver may query whether a managed display screen is the display screen having a defect. If yes, subsequent steps are further performed. If no, the HBM mode is enabled in an existing manner.

In an example scenario, a lock screen interface is displayed when a full screen of an electronic device is lit. During display of the lock screen interface, the first region and the second region both reach the first brightness value. For example, in response to an operation of the user, the backlight brightness value of the display screen is adjusted to be the highest. For another example, in response to detecting that the ambient light brightness is excessively bright, the backlight brightness value of the display screen is adjusted to be the highest. In this scenario, the gray scale values corresponding to pixel units in the first region and the second region reach the maximum gray scale value. Then, it is detected that the user contacts the first region of the display screen. The target brightness register of the display screen is configured to the second attribute value from the first attribute value. The target brightness register corresponds to the first region, and is configured to control an actual brightness of the first region. After the target brightness register is configured to the second attribute value, the brightness of the first region is corrected from the first brightness value to the second brightness value when the corresponding gray scale value remains unchanged. The brightness of the second region keeps the first brightness value unchanged.

It may be understood that even if the first region reaches the first brightness value, an ideal brightness for collecting a fingerprint is already reached. However, because the brightness of the second region around the first region is also the first brightness value, an operation of the fingerprint is affected. In this case, a brightness difference between the first region and the second region further needs to be increased. In this scenario, before the attribute value of the target brightness register is not modified, due to limitations of specifications of some display screens, the brightness of the first region cannot be increased to the second brightness value greater than the first brightness value, which often easily causes a fingerprint unlocking failure. In the foregoing example scenario, the electronic device may modify the attribute value of the target brightness register, so that the brightness of the first region breaks through the first brightness value to reach the second brightness value when the gray scale value corresponding to the first region remains unchanged, to complete correction of the brightness of the first region. In this way, an obvious light spot may be presented on the display screen, thereby improving a success rate of fingerprint unlocking.

An embodiment of this application further provides an electronic device. The electronic device may include a display screen, a memory, a fingerprint collection module, and one or more processors. The display screen, the fingerprint collection module, and the memory are coupled to the processors. The memory is configured to store computer program code. The computer program code includes a computer instruction. When the processor executes the computer instruction, the electronic device may be caused to perform the steps performed by the mobile phone in the foregoing embodiments. Certainly, the electronic device includes but is not limited to the memory and the foregoing one or more processors.

An embodiment of this application further provides a chip system. The chip system is applicable to the electronic device in the foregoing embodiments. The chip system includes at least one processor and at least one interface circuit. The processor may be a processor in the foregoing electronic device. The processor may be interconnected to the interface circuit through a line. The processor may receive a computer instruction from the memory of the foregoing electronic device through the interface circuit and execute the computer instruction. When the computer instruction is executed by the processor, the electronic device may be caused to perform the steps performed by the mobile phone in the foregoing embodiments. Certainly, the chip system may further include another discrete device. This is not specifically limited in this embodiment of this application.

In some embodiments, through the descriptions of the foregoing implementations, a person skilled in the art may clearly understand that, for the purpose of convenient and brief description, only division of the foregoing functional modules is used as an example for description. In actual application, the foregoing functions may be allocated to and completed by different functional modules according to requirements. In other words, an inner structure of an apparatus is divided into different functional modules to complete all or some of the functions described above. For a specific working process of the system, apparatus, and unit described above, reference may be made to the corresponding processes in the above method embodiments. Details are not described herein.

In this embodiment of this application, functional units in the embodiments may be integrated into one processing unit, or each of the units may exist alone physically, or two or more units may be integrated into one unit. The foregoing integrated unit may be implemented in a form of hardware, or may be implemented in a form of a software functional unit.

If the integrated unit is implemented in the form of the software functional unit and is sold or used as an independent product, the integrated unit may be stored in a computer-readable storage medium. Based on such an understanding, the technical solutions of embodiments of this application essentially, or the part contributing to the related art, or all or some of the technical solutions may be implemented in the form of a software product. The computer software product is stored in a storage medium and includes a plurality of instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a disk, or a compact disc.

The above descriptions are merely specific implementations of embodiments of this application, but the protection scope of embodiments of this application is not limited thereto. Any variation or replacement within the technical scope disclosed in embodiments of this application shall fall within the protection scope of embodiments of this application. Therefore, the protection scope of embodiments of this application shall be subject to the protection scope of the claims.

## Claims

1. A display screen control method, applied to an electronic device, wherein the electronic device comprises a display screen and a fingerprint sensor, the fingerprint sensor is configured below the display screen, and the method comprises:
displaying a lock screen interface;
detecting, when brightnesses of a first region and a second region of the display screen are a first brightness value, that a user touches the first region of the display screen, wherein the first region of the display screen overlaps with a sensing surface of the fingerprint sensor, the second region is a display region of the display screen other than the first region, and the first brightness value is a pre-configured maximum brightness value corresponding to the display screen; and
configuring a target brightness register of the display screen from a first attribute value to a second attribute value, wherein the target brightness register corresponds to the first region and is configured to control the brightness of the first region, and correcting the brightness of the first region from the first brightness value to a second brightness value after configuring the target brightness register to the second attribute value, wherein the second brightness value is greater than the first brightness value.

2. The method according to claim 1, wherein after the detecting that a user touches the first region of the display screen and before the configuring a target brightness register of the display screen to the second attribute value, the method further comprises:
obtaining an ambient light brightness value;
determining that the ambient light brightness value is greater than a first brightness threshold, or determining that a first backlight brightness corresponding to the ambient light brightness value is greater than a third brightness value, wherein the third brightness value is less than the first brightness value, a difference between the third brightness value and the first brightness threshold is less than a preset value, and the electronic device is configured with a correspondence between a different ambient light brightness and a backlight brightness;
obtaining a first real-time backlight brightness of the display screen; and
determining that the first real-time backlight brightness is greater than the third brightness value.

3. The method according to claim 1, wherein after the detecting that a user touches the first region of the display screen and before the configuring a target brightness register of the display screen to the second attribute value, the method further comprises:
obtaining an ambient light brightness value;
determining that the ambient light brightness value is greater than a first brightness threshold, or determining that a first backlight brightness corresponding to the ambient light brightness value is greater than a third brightness value, wherein the third brightness value is less than the first brightness value, a difference between the third brightness value and the first brightness threshold is less than a preset value, and the electronic device is configured with a correspondence between a different ambient light brightness and a backlight brightness;
obtaining a first real-time backlight brightness of the display screen and a first gray scale value of a displayed background image; and
determining that the first real-time backlight brightness is greater than the third brightness value, and that the first gray scale value is greater than a preset gray scale threshold.

4. The method according to any one of claims 1 to 3, further comprising:
collecting first fingerprint information during a period in which the brightness of the first region is the second brightness value;
restoring the configuration of the target brightness register of the display screen from the second attribute value to the first attribute value after collecting the first fingerprint information; and
stopping, by the display screen, correcting the brightness of the first region after the target brightness register is configured as the first attribute value.

5. The method according to any one of claims 1 to 4, wherein before the configuring a target register of the display screen to the second attribute value, the method further comprises:
reading a first attribute value of the target brightness register from the display screen, and storing the first attribute value; and
determining the second attribute value based on the first attribute value and a pre-configured configuration file, wherein the configuration file comprises the first attribute value and a corresponding attribute correction value, and the second attribute value is a sum of the first attribute value and the attribute correction value.

6. The method according to any one of claims 1 to 5, wherein the electronic device further comprises a display driver, and the correcting the brightness of the first region from the first brightness value to a second brightness value comprises:
receiving, by the display screen, first brightness configuration information from the display driver, wherein the first brightness configuration information carries the first brightness value for the first region; and
increasing, at the second attribute value of the target brightness register, the brightness of the first region to the second brightness value in response to the first brightness configuration information, wherein the second brightness value is a sum of the first brightness value and a first brightness increment, and the first brightness increment is related to the attribute correction value between the second attribute value and the first attribute value.

7. The method according to claim 4, wherein the electronic device further comprises a display driver, and after the stopping, by the display screen, correcting the brightness of the first region, the method further comprises:
receiving, by the display screen, second brightness configuration information from the display driver, wherein the second brightness configuration information carries a fourth brightness value for the first region, and the fourth brightness value is less than or equal to the first brightness value; and
adjusting, at the first attribute value of the target brightness register, the brightness of the first region to the fourth brightness value in response to the second brightness configuration information.

8. The method according to claim 4, wherein before the configuring a target brightness register of the display screen to the first attribute value, the method further comprises:
instructing the display screen to reduce the backlight brightness;
obtaining a second real-time backlight brightness of the display screen and/or a second gray scale value of a displayed background image;
determining that the second real-time backlight brightness is less than or equal to the third brightness value; or
determining that the second gray scale value is less than or equal to the preset gray scale threshold.

9. The method according to claim 1, wherein when an ambient light brightness value in a space where the electronic device is located is greater than a first brightness threshold, the method further comprises:
controlling the display screen to be off in response to a user operation;
displaying a screen unlocking interface in response to the user touching the first region, wherein during display of the screen unlocking interface, the second region of the display screen comprises an unlit pixel unit; and
controlling the display screen to adjust the brightness of the first region to a fifth brightness value, wherein the fifth brightness value is less than or equal to the first brightness value.

10. An electronic device, comprising a display screen, a fingerprint sensor, a processor, and a memory, wherein the fingerprint sensor is configured to collect fingerprint information, the display screen is configured to adjust a backlight brightness to assist the fingerprint sensor in collecting a fingerprint, the memory is configured to store a computer instruction, and the computer instruction, when executed by the processor, causes the electronic device to perform the method according to any one of claims 1 to 9.

11. A computer-readable storage medium, comprising a computer program or an instruction, wherein the computer program or the instruction, when executed on a computer, causes the computer to perform the method according to any one of claims 1 to 9.
